# EUROPÄISCHE PATENTSCHRIFT

(11) **EP 0 929 559 B1**
(45) Veröffentlichungstag und Bekanntmachung des Hinweises auf die Patenterteilung: **17.04.2002**
(21) Anmeldenummer: 97909312.7
(22) Anmeldetag: 24.09.1997
(51) Int. Cl.: C07F 9/30

(54) **VERFAHREN ZUR HERSTELLUNG VON ALUMINIUM-DIALKYLPHOSPHINATEN**
METHOD FOR PRODUCING ALUMINUM DIALKYL PHOSPHINATES
PROCEDE DE PRODUCTION DE DIALKYLPHOSPHINATES D'ALUMINIUM

(30) Priorität: 27.09.1996 DE 19639657
(43) Veröffentlichungstag der Anmeldung: 21.07.1999
(73) Patentinhaber: Ticona GmbH, 65451 Kelsterbach (DE)
(72) Erfinder: SEITZ, Thomas, D-68542 Heddesheim (DE)
(86) Internationale Anmeldenummer: EP9705228
(87) Internationale Veröffentlichungsnummer: WO9813371

(56) Entgegenhaltungen:
- EP-A- 0 245 207
- EP-A- 0 699 708
- FR-A- 1 558 606
- GB-A- 2 017 706
- MIKULSKI C M ET AL: "METHYLPHENYLPHOSPHINATE COMPLEXES WITH TRI- AND TETRA-POSITUVE METAL IONS" TRANSITION METAL CHEMISTRY, Bd. 6, Nr. 2, 1981, Seiten 79-82, XP000675826 in der Anmeldung erwähnt

## Beschreibung

Die vorliegende Erfindung betrifft ein Verfahren zur Herstellung von Aluminiumsalzen von Dialkylphosphinsäuren.

Die Aluminiumsalze von Dialkylphospinsäuren (im folgenden auch 'Aluminiumphosphinate' genannt) besitzen eine wachsende technische Bedeutung als Flammschutzmittel für Kunststoffe bzw. Kunststofformmassen. Insbesondere stellen sie eine Alternative für die bisher verwendeten halogenhaltigen Flammschutzmittel bzw. Flammhemmer dar, die aufgrund des Halogengehalts korrosiv wirken und zudem ökologisch von Nachteil sind.

Verfahren zur Herstellung von Aluminiumphosphinaten sind bereits beschrieben worden.
So offenbart N.M. Karayannis et al. in Transition Met. Chem., 6, 79-82 (1981) ein Verfahren zur Herstellung des Aluminiumsalzes der Methylphenylphosphinsäure, wonach der Methylester der Methylphenylphosphinsäure mit wasserfreiem Aluminiumchlorid umgesetzt wird. Dabei ist allerdings ein großer Überschuß an Methylester erforderlich, und es entsteht ökologisch bedenkliches Methylchlorid in stöchiometrischen Mengen. Ein weiterer Nachteil ist, daß die Chloridionen korrosiv gegenüber den technisch gebräuchlichen Stahlapparaturen wirken. Zudem kann ein Teil der Chloridionen im erhaltenen Aluminiumphosphinat verbleiben, was aufgrund der korrosiven Wirkung der Chloridionen zu Problemen in der Anwendung führen kann.

In dem französischem Patent Nummer 1,558,606 ist ein Verfahren zur Herstellung von Aluminium-alkylhydroxyphenylalkylphosphinat aus dem entsprechenden Alkalimetallsalz beschrieben, wobei ebenfalls mit Aluminiumchlorid umgesetzt wird.

Weiter ist bekannt, Aluminiumphosphinate durch Neutralisation der entsprechenden Phosphinsäuren mit einer Suspension von Aluminiumhydroxid in Wasser herzustellen (EP-A-0 699 708).
Dieses Verfahren erfordert jedoch eine sehr lange Reaktionszeit und ist daher für die Herstellung im technischen Maßstab aufwendig und teuer, wodurch die Einsatzmöglichkeiten der Produkte als Flammhemmer für Kunststoffe stark beeinträchtigt wird. Beispielsweise sind für das als Flammhemmer besonders interessante Aluminium-ethylmethylphosphinat 65 Stunden Reaktionszeit bei 80 bis 85 °C nötig.
Die als Ausgangsmaterial einzusetzenden Phosphinsäuren werden durch saure Verseifung von Phosphinsäureestern erhalten (DE-A-2 441 878, DE-A-2 441 783), was für die Darstellung von Ethylmethylphosphinsäure Reaktionstemperaturen von mehr als 180 °C über einen Zeitraum von über 30 Stunden erfordert.

Es bestand daher ein Bedürfnis nach einem Verfahren zur Herstellung von Aluminium-dialkylphosphinaten, nach dem die erwünschten Produkte einfach und in kurzer Zeit unter Vermeidung von ökologisch bedenklichen, chloridhaltigen Ausgangsmaterialien und Nebenprodukten erhalten werden können.

Erfindungsgemäß wurde nun gefunden, daß man auf einfache und wirtschaftliche Weise Aluminiumphosphinate der allgemeinen Formel (I) 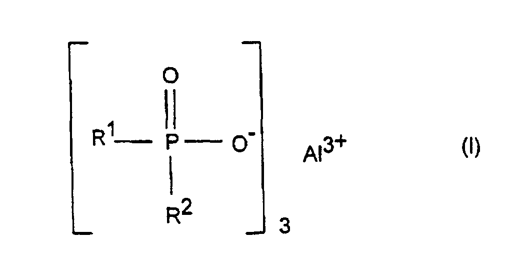 worin R¹, R² gleich oder verschieden, linear oder verzweigt, C₁-C₈-Alkyl, vorzugsweise C₁-C₆-Alkyl, zB Methyl, Ethyl, n-Propyl, iso-Propyl, n-Butyl, iso-Butyl, tert.-Butyl, n-Pentyl oder ein Isomer davon, oder n-Hexyl oder ein Isomer davon, oder Phenyl, bedeuten, herstellen kann, indem das entsprechende Alkalimetallphosphinat der allgemeinen Formel (III) mit Aluminiumsulfat umgesetzt wird; wobei das Alkalimetallphosphinat der allgemeinen Formel (III) in Anlehnung an die in J.Am.Chem.Soc. (1972), 94, 9260 beschriebene Vorschrift durch Erhitzen der entsprechenden Phosphinsäureester der allgemeinen Formel (II) unter Zusatz einer äquivalenten Menge wäßriger Alkalihydroxidlösung und anschließender (azeotroper) Destillation des Wasser-Alkohol (R³-OH)-Gemisches bei einer Badtemperatur von 80 bis 180 °C, vorzugsweise von 100 bis 150 °C, erhalten werden, und das erhaltene Alkalimetallphosphinat der Formel III in einer Eintopfsynthese ohne vorhergehende Reinigung und/oder 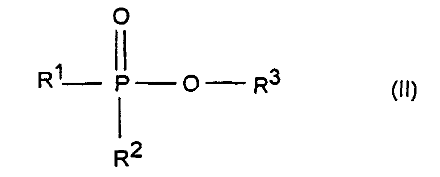 Isolierung mit Aluminiumsulfat umpesetzt wird.

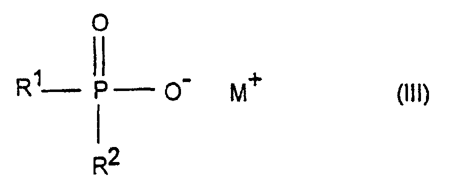

In Formel (III) haben R¹ und R² die vorstehend beschriebene Bedeutung und M ist ein Metall der Gruppe I des Periodensystems, wobei M = Natrium besonders bevorzugt ist.

Fig. 1 zeigt das Verfahren nach der EP-A-0 699 708.

Fig. 2 zeigt das erfindungsgemäße Verfahren inklusive die Herstellung der Vorstufen (Schritte 1 und 2).

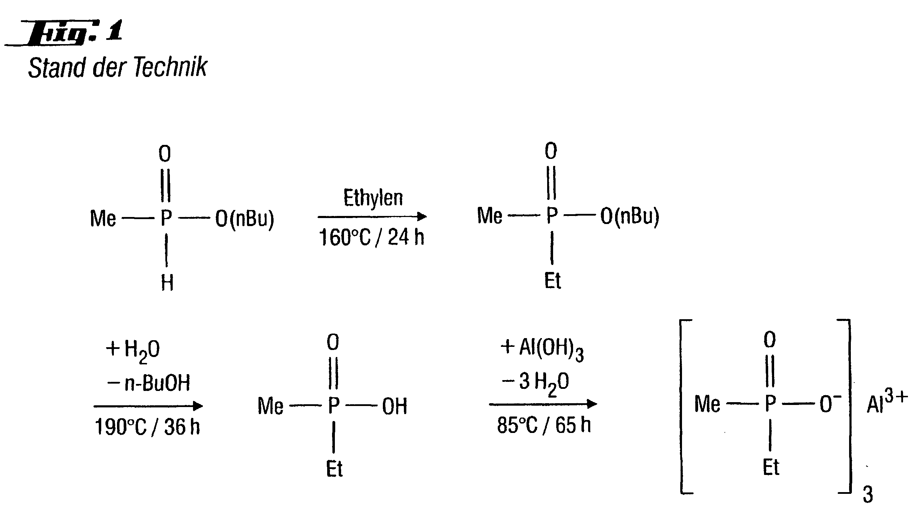

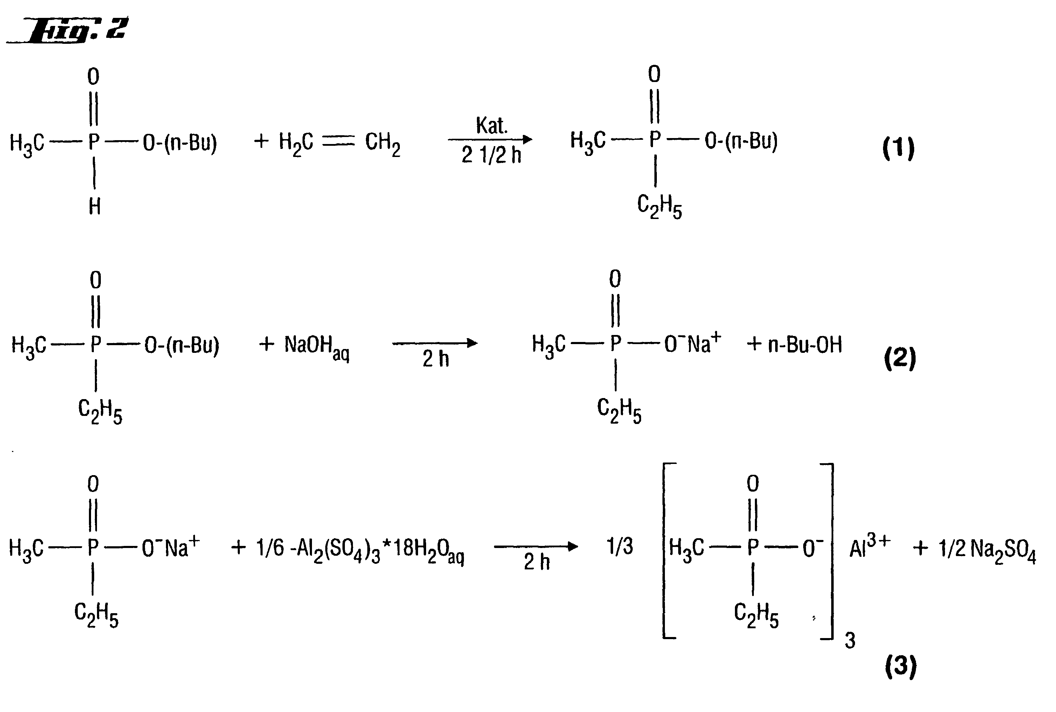

Die Bildung des Aluminiumphosphinats der allgemeinen Formel (I) erfolgt durch Zutropfen des Aluminiumsulfats bei einer Temperatur von vorzugsweise 20 bis 27 °C (Raumtemperatur). Dabei fällt das zu bildende Produkt überraschenderweise sofort aus, so daß die Zutropfdauer von etwa 10 Minuten bis 4 Stunden der Reaktionszeit entspricht. Ein Nachrühren ist nicht erforderlich.

Die Isolierung der Aluminiumphosphinate kann durch einfache Filtration und Nachwaschen mit Wasser, um möglicherweise noch anhaftendes Sulfat zu entfernen, erfolgen.

Die Menge an einzusetzendem Aluminiumsulfat ist unkritisch. Für das erfindungsgemäße Verfahren ist es ausreichend, eine stöchiometrische Menge von 1/6 Äquivalent, bezogen auf das Alkalimetallphosphinat, zu verwenden.

Als Lösungsmittel kann jedes Lösungsmittel verwendet werden, in dem die Ausgangsmaterialien löslich sind. Besonders bevorzugt ist jedoch Wasser.

Um eine gute Körnigkeit des Produkts und damit gute Siebeigenschaften zu erhalten, ist es vorteilhaft, das Lösungsmittel in einer Mindestmenge von etwa 3,5 ml, bezogen auf 1 g Alkalimetallphosphinat, einzusetzen.

Hierbei haben R¹, R² dieselbe, vorstehend für Formel (I) und (III) beschriebene Bedeutung und R³ ist eine Alkylgruppe mit 1 bis 8 C-Atomen, vorzugsweise 1 bis 4 C-Atomen, wobei R³ = n-Butyl oder iso-Butyl ganz besonders bevorzugt ist.
Die Reaktionszeiten für den Verseifungsschritt liegen bei 1 bis 4 Stunden.

Bei dem erfindungsgemäßen Verfahren sind die Ausbeuten, bezogen auf den eingesetzten Phosphinsäureester der allgemeinen Formel (II), nahezu quantitativ.

Der Phosphinsäureester der allgemeinen Formel (II) kann analog der Vorschrift in DE-A-2 100 779 durch radikalische Addition von 1-Olefinen an die entsprechenden Phosphonigsäureester dargestellt werden.
Auch in dieser Stufe ist eine Isolierung und Reinigung der erhaltenen Phosphinsäureester der allgemeinen Formel (II) nicht erforderlich, sondern sie können direkt, wie vorstehend beschrieben, in einer Eintopfsynthese zu den entsprechenden Alkalimetallsalzen umgesetzt werden.

Zusammenfassend ist festzustellen, daß sich das erfindungsgemäße Verfahren durch beträchtlich verkürzte Reaktionszeiten und niedrigere Reaktionstemperaturen im Vergleich zu dem in der EP-A-0 699 708 beschriebenen Verfahren auszeichnet. Weiter vermeidet das erfindungsgemäße Verfahren den Einsatz von ökologisch bedenklichen Halogeniden als Reaktionspartner und es hat zudem den Vorteil, daß die Synthese der Vorstufen sowie die eigentliche Umsetzung in einer Eintopfsynthese ohne besondere Isolierung und Reinigung der jeweiligen Vorstufen durchgeführt wird.

Im folgenden wird das erfindungsgemäße Verfahren durch ausgewählte Beispiele veranschaulicht.

### Beispiel 1: Aluminiumethylmethylphosphinat

Unter Argonatmosphäre werden zu 330,3 g (2,5 Mol) Ethylmethylphosphinsäure-n-butylester bei 25°C 312,5 g (2,5 Mol) 32 %ige Natronlauge und 156 ml Wasser unter Rühren zügig zugegeben. Das n-Butanol-Wasser-Gemisch wird bei 140 °C azeotrop abdestilliert (Siedebereich: 93-96°C), wobei das Rücklaufverhältnis so eingestellt wird, daß nach 2h 15 min nur noch reines Wasser überdestilliert.
Die so erhaltene gelbliche Lösung von Natriummethylphosphinat wird mit weiteren 936 ml Wasser versetzt. Bei 23°C werden unter Rühren innerhalb von 2 h 277,7 g (0,42 Mol) Aluminiumsulfat-octadecahydrat in 270 ml Wasser zugetropft, wobei das Produkt sofort ausfällt. Man filtriert die erhaltene Lösung und wäscht den Rückstand mit Wasser nach. Trocknung unter Vakuum bei 150°C ergibt 278,6 g Aluminiumethylmethylphosphinat (96 % der Theorie) in Form eines weißen Pulvers (Fp. >380°C).

### Beispiel 2: Aluminiummethyl-n-propylphosphinat

Unter Argonatmosphäre werden zu 463,2 g (2,6 Mol) Methyl-npropylphosphinsäure-iso-butylester bei 25°C 324,7 g (2,6 Mol) 32 %ige Natronlauge und 262 ml Wasser unter Rühren zügig zugegeben. Das iso-Butanol-Wasser-Gemisch wird bei 130 °C azeotrop abdestilliert (Siedebereich: 90-95°C), wobei das Rücklaufverhältnis so eingestellt wird, daß nach 2 h 15 min nur noch reines Wasser überdestilliert.
Die so erhaltene gelbe Lösung von Natriummethyl-n-propylphosphinat wird mit weiteren 1050 ml Wasser versetzt. Bei 23°C werden unter Rühren innerhalb von 2 h 288,6 g (0,43 Mol) Aluminiumsulfat-octadecahydrat in 300 ml Wasser zugetropft, wobei das Produkt sofort ausfällt. Man filtriert die erhaltene Lösung und wäscht den Rückstand mit Wasser nach. Trocknung unter Vakuum bei 150°C ergibt 330,0 g Aluminiummethyl-n-propylphosphinat (99 % der Theorie) in Form eines weißen Pulvers (Fp. > 380°C).

## Patentansprüche

1. Verfahren zur Herstellung von Aluminiumphosphinaten der allgemeinen Formel (I) 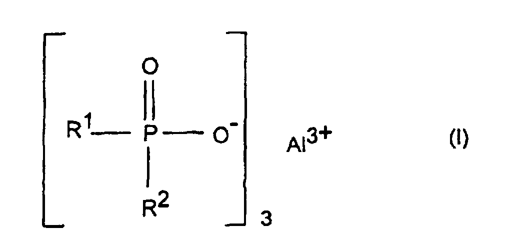 worin R¹ und R², gleich oder verschieden, eine lineare oder verzweigte C₁-C₈-Alkylgruppe oder Phenyl bedeuten, durch Umsetzung der entsprechenden Alkalimetallphosphinate der allgemeinen Formel (III) 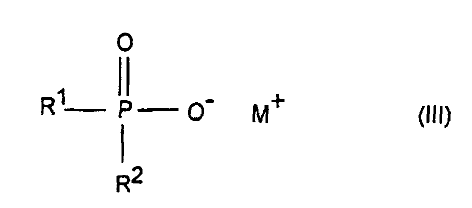 worin R¹ und R² die vorstehende Bedeutung haben und M ein Metall der Gruppe I des Periodensystems bedeutet,
mit Aluminiumsulfat, wobei das Alkalimetallphosphinat der Formel (III) durch Verseifung eines Phosphinsäureesters der allgemeinen Formel (II) 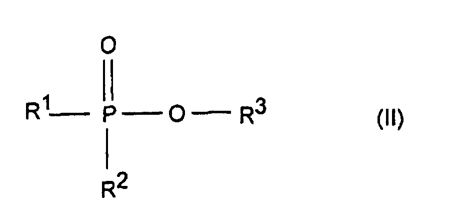 worin R¹ und R² die gleiche Bedeutung wie in Anspruch 1 oder 2 haben und R³ eine lineare oder verzweigte C₁-C₈-Alkylgruppe bedeutet, unter Abdestillieren des erhaltenen Alkohols hergestellt wird, und das erhaltene Alkalimetallphosphinat der Formel (III) in einer Eintopfsynthese ohne. vorhergehende Reinigung und/oder Isolierung mit Aluminiumsulfat zu dem entsprechenden Aluminiumphosphinat umgesetzt wird.

2. Verfahren nach Anspruch 1, wobei R¹ und R² ausgewählt werden unter Methyl, Ethyl, n-Propyl, iso-Propyl, n-Butyl, iso-Butyl, tert-Butyl, n-Pentyl oder einem isomeren davon oder n-Hexyl oder einem Isomeren davon.

3. Verfahren nach einem der Ansprüche 1 bis 2, wobei das Aluminiumsulfat in stöchiometrischer Menge, bezogen auf das Alkalimetallphosphinat, eingesetzt wird.

4. Verfahren nach einem der vorhergehenden Ansprüche, wobei die Umsetzung des Alkalimetallphosphinats der Formel (III) mit Aluminiumsulfat in einem wäßrigen Medium als Lösungsmittel erfolgt

5. Verfahren nach Anspruch 4, wobei Wasser in einer Mindestmenge von etwa 3,5 ml, bezogen auf 1 g Alkalimetallphosphinat der Formel (III), eingesetzt wird.

6. Verfahren nach einem der vorhergehenden Ansprüche, wobei die Umsetzung des Alkalimetallphosphinats der Formel (III) mit Aluminiumsulfat bei einer Temperatur von 20 bis 27 °C durchgeführt wird.

7. Verfahren nach einem der vorhergehenden Ansprüche, wobei
R¹, R² gleich oder verschieden eine lineare oder verzweigte C₁-C₆-Alkylgruppe oder Phenyl,
R³ eine lineare oder verzweigte C₁-C₄-Alkylgruppe, und
M Natrium bedeuten.

8. Verfahren nach Anspruch 7, wobei
R¹, R² Methyl, Ethyl, n-Propyl, iso-Propyl, n-Butyl, tert-Butyl, n-Pentyl oder einem Isomeren davon oder n-Hexyl oder einem Isomeren davon,
R³ n-Butyl oder iso-Butyl, und
M Natrium bedeuten.

## Claims

1. A process for preparing aluminum phosphinates of the formula (I) 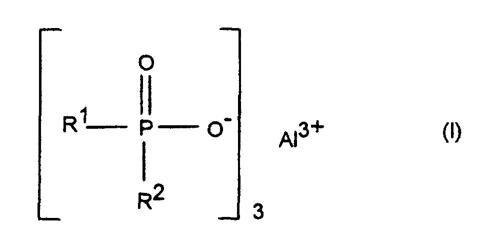 where R¹ and R² are identical or different and are linear or branched C₁-C₈-alkyl or phenyl, by reacting the corresponding alkali metal phosphinates of the formula (III) 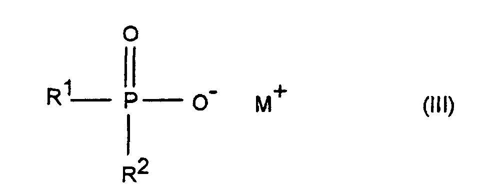 where R¹ and R² are as defined above and M is a metal of group I of the periodic table, with aluminum sulfate, the alkali metal phosphinate of the formula (III) is prepared by saponification of a phosphinate of the formula (II) 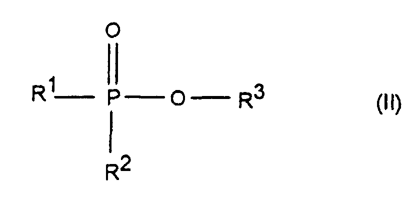 where R¹ and R² are as defined in claim 1 or 2 and R³ is linear or branched C₁-C₈-alkyl, the alcohol which is produced being distilled off, and the resultant alkali metal phosphinate of the formula (III), without prior purification and/or isolation, is reacted in a one-pot synthesis with aluminum sulfate to give the corresponding aluminum phosphinate.

2. The process as claimed in claim 1, where R¹ and R² are methyl, ethyl, n-propyl, isopropyl, n-butyl, isobutyl, tert-butyl, n-pentyl or an isomer thereof, or n-hexyl or an isomer thereof.

3. The process as claimed in any one of claims 1 or 2, where the aluminum sulfate is used in a stoichiometric amount, based on the alkali metal phosphinate.

4. The process as claimed in any one of the foregoing claims, where the alkali metal phosphinate of the formula (III) is reacted with aluminum sulfate in an aqueous medium as solvent.

5. The process as claimed in claim 4, where water is used in an amount of at least 3.5 ml, based on 1 g of alkali metal phosphinate of the formula (III).

6. The process as claimed in any one of the foregoing claims, where the alkali metal phosphinate of the formula (III) is reacted with aluminum sulfate at a temperature of from 20 to 27°C.

7. The process as claimed in any one of the foregoing claims, where R¹ and R² are identical or different and are linear or branched C₁-C₆-alkyl or phenyl,
R³ is linear or branched C₁-C₄-alkyl, and
M is sodium.

8. The process as claimed in claim 7, where
R¹ and R² are methyl, ethyl, n-propyl, isopropyl, n-butyl, tert-butyl, n-pentyl or an isomer thereof or n-hexyl or an isomer thereof,
R³ is n-butyl or isobutyl, and
M is sodium.

## Revendications

1. Procédé pour la préparation de phosphinates d'aluminium de formule générale (I) 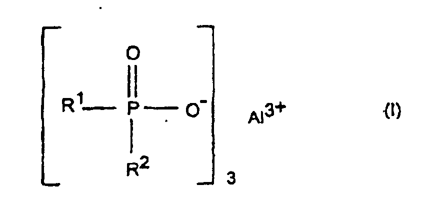 dans laquelle R¹ et R², identiques ou différents, représentent un groupe alkyle en C₁-C₈ linéaire ou ramifié, ou phényle, par mise en réaction des phosphinates de métaux alcalins correspondants, de formule générale (III) 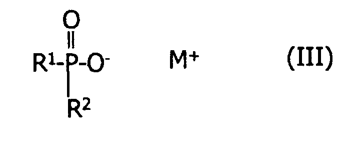 dans laquelle R¹ et R² ont les significations précédentes et M représente un métal du groupe I du tableau périodique,
avec du sulfate d'aluminium, le phosphinate de métal alcalin de formule (III) étant préparé par saponification d'un ester d'acide phosphinique de formule générale (II) 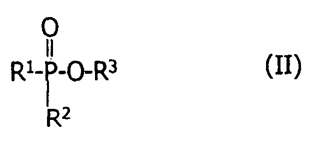 dans laquelle R¹ et R² ont les mêmes significations que dans la revendication 1 ou 2 et R³ représente un groupe alkyle en C₁-C₈ linéaire ou ramifié, avec élimination par distillation de l'alcool obtenu, et le phosphinate de métal alcalin de formule (III) obtenu est converti en le phosphinate d'aluminium correspondant dans une synthèse en un seul récipient, sans purification ni isolement préliminaire(s).

2. Procédé selon la revendication 1, dans lequel R¹ et R² sont choisis parmi les groupes méthyle, éthyle, n-propyle, isopropyle, n-butyle, isobutyle, tert-butyle, n-pentyle ou isomère de celui-ci ou n-hexyle ou un isomère de celui-ci.

3. Procédé selon la revendication 1 ou 2, dans lequel le sulfate d'aluminium est utilisé en quantité stoechiométrique par rapport au phosphinate de métal alcalin.

4. Procédé selon l'une quelconque des revendications précédentes, dans lequel la réaction du phosphinate de métal alcalin de formule (III) est effectuée avec du sulfate d'aluminium dans un milieu aqueux en tant que solvant.

5. Procédé selon la revendication 4, dans lequel l'eau est utilisée en une quantité minimale d'environ 3,5 ml, par rapport à 1 g de phosphinate de métal alcalin de formule (III).

6. Procédé selon l'une quelconque des revendications précédentes, dans lequel la réaction du phosphinate de métal alcalin de formule (III) avec du sulfate d'aluminium est effectuée à une température de 20 à 27°C.

7. Procédé selon l'une quelconque des revendications précédentes, dans lequel
R¹, R², identiques ou différents, représentent un groupe alkyle en C₁-C₆ linéaire ou ramifié, ou phényle,
R³ représente un groupe alkyle en C₁-C₄ linéaire ou ramifié, et
M représente le sodium.

8. Procédé selon la revendication 7, dans lequel
R¹, R² représentent le groupe méthyle, éthyle, n-propyle, isopropyle, n-butyle, tert-butyle, n-pentyle ou un isomère de celui-ci ou n-hexyle ou un isomère de celui-ci,
R³ représente le groupe n-butyle ou isobutyle, et
M représente le sodium.
